**Europäisches Patentamt**

(19) **European Patent Office**

**Office européen des brevets**

(11) Publication number: **0 176 143**
**B1**

(12) **EUROPEAN PATENT SPECIFICATION**

(45) Date of publication of patent specification: **17.05.89**

(51) Int. Cl.⁴: **G 03 B 27/52,** G 03 G 15/04

(21) Application number: **85201470.3**

(22) Date of filing: **16.09.85**

(54) Optical imaging system for a copying machine.

(30) Priority: **24.09.84 NL 8402912**

(43) Date of publication of application:
**02.04.86 Bulletin 86/14**

(45) Publication of the grant of the patent:
**17.05.89 Bulletin 89/20**

(84) Designated Contracting States:
**DE FR GB IT NL SE**

(56) References cited:
**GB-A-2 122 362**
**US-A-4 158 497**

(73) Proprietor: **Océ-Nederland B.V.**
**St. Urbanusweg 43**
**NL-5914 CC Venlo (NL)**

(72) Inventor: **Zweedijk, Johan Jacob**
**Schillerstraat 41**
**NL-5924 CJ Venlo (NL)**

(74) Representative: **Hanneman, Henri W.A.M. et al**
**Océ-Nederland B.V. Patents and Information**
**Postbus 101**
**NL-5900 MA Venlo (NL)**

Courier Press, Leamington Spa, England.

## Description

This invention relates to an optical imaging system in a copying machine for imaging an original in changed form in one direction, which system projects an image of an original moving relatively to the optical system in the object space onto a light-sensitive element moving relatively to the optical system in the image space, the speed of an image point which corresponds to an original point, in the image plane being unequal to the speed of the light-sensitive element.

An optical imaging system of this kind is known from US patent 4,394,083. That discloses a copying machine having an imaging system consisting of arrays of focusing lenses known by the name SELFOC. In this known machine, an orginal lying on a transparent plate, and a light-sensitive element disposed on a rotating drum, are taken along a lens array in directions perpendicular to the plane passing through the optical axes of the lenses. In order to image an original in reduced form in one direction, i.e. in the direction of travel, the speed at which the transparent plate is moved is increased. A disadvantage of this known machine is that movement unsharpness in the image occurs due to the increase in speed of the image on the light-sensitive element, i.e. an image point of the original will, as seen in the direction of travel, be imaged as a line, the length of said line increasing with the distance over which imaging takes place (the slit width). According to the above patent, with a slit width above approximately 3 mm, the movement unsharpness would become such that the resulting copy would be unacceptable.

The object of the invention is to provide an optical imaging system for a copying machine without this disadvantage. This object is attained in that in an optical imaging system according to the preamble, the light-sensitive element includes an angle with the image plane which angle is set to a value at which the image of an original point on the light-sensitive element passes through at least a part of the image space in the same time as an arbitrary point of the light-sensitive element passes through that part of the image space. The part of the image space to be traversed at least in the same time is the part in which the light intensity on the light-sensitive element is the greatest.

As a result, a copy with a relatively clear image can be obtained in the copying machine, in a surprisingly simple manner.

The invention is very suitable for use in a copying machine in which an image developed with powder on a light-sensitive element is transferred, via a resiliently deformable intermediate, onto a receiving material as described in U.S. Patents 3,591,276 and 3,669,706. As explained in our earlier Netherlands patents application 8301978, these known copying machines have the disadvantage that the powder image is transferred onto the receiving material with an elongation in the direction of travel. By taking the original through the object space in a direction which includes an acute angle with the optical axis of the imaging system and at a higher speed adapted to said angle, a copying machine provided with an image transfer system as described in the above U.S. Patents 3,591,276 and 3,669,706 can produce a copy in which the image dimensions are accurately equivalent to the image dimensions of the original from which the copy has been made.

It should be noted that U.K. Patent Application 2,122,362 discloses a copying machine for 1:1 imaging of an original on a light-sensitive element, wherein the original and the light-sensitive element are both moved at the same speeds and include a same acute angle with the optical axis of the imaging system.

The application states that if only the original or if only the light-sensitive element includes an acute angle with the optical axis, a relatively unclear imaging occurs.

The invention will be explained with reference to the accompanying drawings wherein:

Figure 1 is a diagrammatic cross-section through an electrophotographic copying machine in which an optical imaging system according to the invention can be used,

Figure 2 is a diagrammatic cross-section of an imaging system according to the invention.

Figure 3 is a graph showing the relationship between the angle formed by an original in the object space with the optical axis of the imaging system and the contrast transmission of the imaging system.

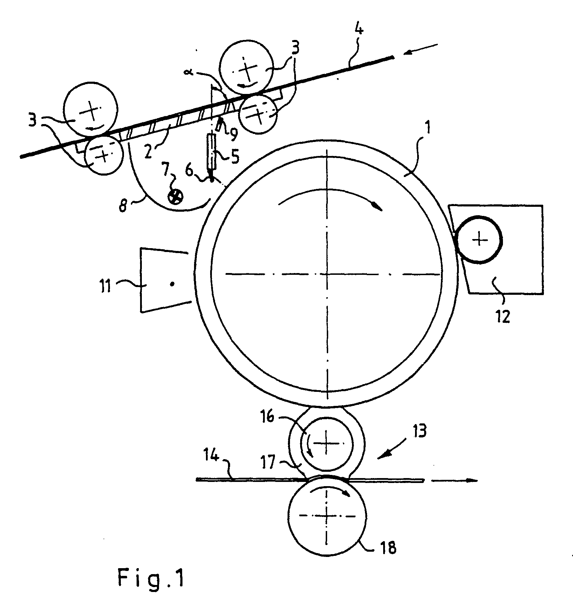

The copying machine represented in Figure 1 comprises a photoconductive drum 1 rotatable in the direction indicated by an arrow. At some distance above the drum is a glass plate 2 which extends parallel to the drum axis over a length equal to the drum length. By means of pairs of rollers 3 an original 4 can be fed over the glass plate 2 in the direction indicated by an arrow. Between the glass plate 2 and the drum 1 there is disposed a glass fibre array 5 consisting of one or more arrays of image forming glass fibres. The optical axes of these glass fibres all form an acute angle $\alpha$ of 73.7° with the glass plate 2. These glass fibres can together image a strip of an original taken over the glass plate, with an imaging ratio of 1:1. The optical axis of each glass fibre intersects the drum axis at some distance.

On that side of the glass fibre array 5 which is remote from the glass plate 2 there is disposed a mirror 6 at an angle such that said mirror projects perpendicularly onto the photoconductive drum 1 the image formed by the glass fibre array. A light source 7 in the form of a tube is disposed next to the glass fibre array 5. A reflector 8 partially surrounding the light source 7 and a mirror 9 disposed on that side of the glass fibre array 5 which is situated opposite the light source 7, concentrate the light emitted by the light source 7 in the field of view of the glass fibre array 5.

The rotating photoconductive drum 11 successively passes a charging station 11 for uniformly charging the photoconductive surface of the drum 1, the imaging station described above for image-wise discharging the charged photoconductor, a developing station 12 for developing the formed charge image with a one-component magnetizable developing powder, and a transfer and fixing station 13 for transferring the formed powder image onto a receiving material 14.

The transfer and fixing station 13 comprises an image transfer roller 16 coated with a layer of silicone rubber 17. Roller 16 is pressed against the drum 1 with a relatively slight pressure sufficient to transfer the powder image from the drum onto roller 16. Since the powder image is transferred, as a result of this pressure onto the rubber surface of the roller 16, which undergoes deformation due to elongation, the powder image on the roller 16 as viewed in the circumferential direction of the roller will be compressed when the pressure is removed. The receiving material 14 is pressed against roller 16 by means of a pressure roller 18 at a relatively much higher pressure than the pressure with which roller 16 presses against drum 1, in order for the powder image which has been softened, for example, by the supply of heat, to be transferred onto and pressed firmly on, the receiving material. Since the powder image is transferred by this very much higher pressure from a rubber surface which has elongated more than in the contact zone between the roller 16 and the drum 1, the image is transferred in elongated form onto the receiving material 14. The degree of image elongation thus occurring in the transfer and fixing station depends on the nature of the photoconductive drum 1, the transfer roller 16 (i.e. its coating 17) and the pressure roller 18, as well as the pressures used therein. In the machine represented in Figure 1 this image elongation is 4%.

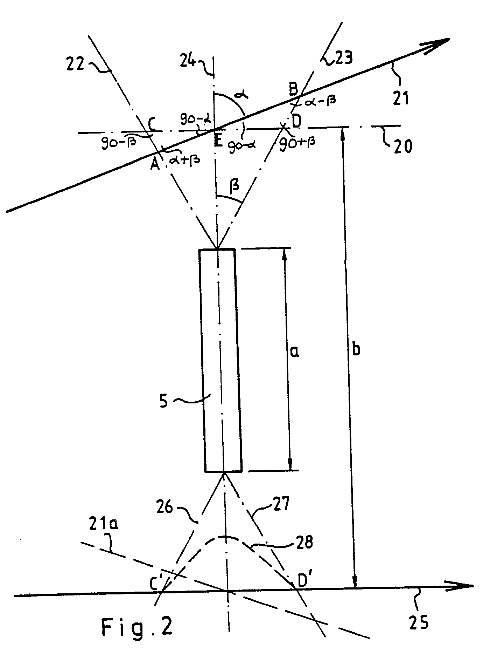

An explanation will now be given with reference to Figure 2 to show how the image elongation inevitably occurring in the transfer and fixing station 13 is compensated for in the optical imaging station. The glass fibre array 5 represented diagrammatically in Figure 2 is a SELFOC lens array of the type SLA 6 having two rows of fibres, a fibre length $a$ of 30 mm, a conjugate length $b$ of 64 mm, and an perture angle $\beta$ of 6°. The object plane 20 of this array, viewed in a direction perpendicular to the array, has a width of about 4 mm. An original is taken in an object plane 21 through the object space (defined by lines 22 and 23) of the glass fibre array 5. Plane 21 passes through the line of intersection of the plane through the optical axis 24 of the glass fibre array 5 and the object plane 20 and forms an angle $\alpha$ with the optical axis 24. The image plane 21a associated with object plane 21 also forms an angle $\alpha$ with the optical axis 24.

A light-sensitive element, e.g. the photoconductive drum 1, is taken in plane 25 through the image space (defined by lines 26 and 27) of the glass fibre array 5. Plane 25 forms a right angle with the optical axis 24 of the glass fibre array 5 and an angle of 90−$\alpha$ with image plane 21a. The

speed at which an original is moved through plane 21 is greater than the speed at which the light-sensitive element moves in plane 25 along the glass fibre array 5. In order fully to compensate for the image elongation in the transfer and fixing station 13, the percentage speed difference is equal to the percentage image elongation occurring in the transfer and fixing station 13. The angle $\alpha$ is now so related to this speed difference that no movement unsharpness occurs in the optical imaging system. To this end the angle $\alpha$ must have a value at which a point of the original passes through the object space (defined by lines 22 and 23) in the same time as a point of the light-sensitive element passes through the image space (defined by lines 26 and 27).

Since, in the case of the 1:1 image represented in Figure 2, the object distance and the image distance of the array measured along the optical axis are equal, this means that the speeds at which the original and the light-sensitive element move in that case must be in the ratio of:

$$\frac{AB}{C'D'}, \text{ or as } \frac{AB}{CD}$$

From Figure 1, it can be readily derived via the sine rule that:

$$AB = EC \cdot \frac{\sin(90-\beta)}{\sin(\alpha+\beta)} + ED \cdot \frac{\sin(90+\beta)}{\sin(\alpha-\beta)}$$

or:

$$AB = \frac{CD}{2}\left(\frac{\sin(90-\beta)}{\sin(\alpha+\beta)} + \frac{\sin(90+\beta)}{\sin(\alpha-\beta)}\right)$$

Since the percentage image elongation is:

$$\left(\frac{V \text{ original}}{V \text{ photoconductor}} - 1\right)100\% = \left(\frac{AB}{CD} - 1\right)100\%,$$

the percentage image elongation=

$$\tfrac{1}{2}\left\{\left(\frac{\sin(90-\beta)}{\sin(\alpha+\beta)} + \frac{\sin(90+\beta)}{\sin(\alpha-\beta)}\right)-1\right\}100\%$$

The value of the angle $\alpha$ is now so selected and adjusted as to satisfy this formula.

If the imaging system has an imaging ratio $n$ other than 1:1, then:

$$n = \frac{CD}{C'D'}$$

Since

$$\frac{V \text{ original}}{V \text{ photoconductor}} = \frac{AB}{C'D'}$$

the percentage image elongation is:

$$\frac{n}{2}\left\{\left(\frac{\sin(90-\beta)}{\sin(\alpha+\beta)}+\frac{\sin(90+\beta)}{\sin(\alpha-\beta)}\right)-1\right\}100\%$$

Given uniform exposure of the original in the object space the light distribution produced by a glass fibre array in the image plane is practically triangular, as indicated by the broken line 28 in Figure 2. This means that only a small part of the quantity of light reflected by the original from near the edges A and B of the exposure slit reaches the light-sensitive element, so that the defocusing (which increases towards the edges A and B as a result of the inclination of the original) only results in a small loss of contrast transmission. It has also been found that the depth of sharpness increases towards the edges A and B, this probably being due to light falling obliquely from said edges into a glass fibre, so that the effective aperture is reduced (diaphragm effect).

The difference between the distances AE and EB increases with a relatively large aperture angle $\beta$. In that case, in order to ensure that the original point is in that part of the object space in which the amount of light reflected by the original and reaching the light-sensitive element is largest (this is on and near the optical axis in the case of light distribution according to line 28 in Figure 2) at the time when the image point corresponding thereto is imaged on the light-sensitive element at the optical axis, the relative aperture angle $\beta$ taken as the basis for determining the angle $\alpha$ is smaller than the angle actually present. In the extreme case in which the light distribution of the optical imaging system has a peak at the optical axis, a value of 0° can be used for the relative aperture angle $\beta$ in the above formulae. The last formula given for the percentage image elongation would then be as follows:

Percentage image elongation=

$$\left(\frac{1}{\sin\alpha}-1\right)100\%$$

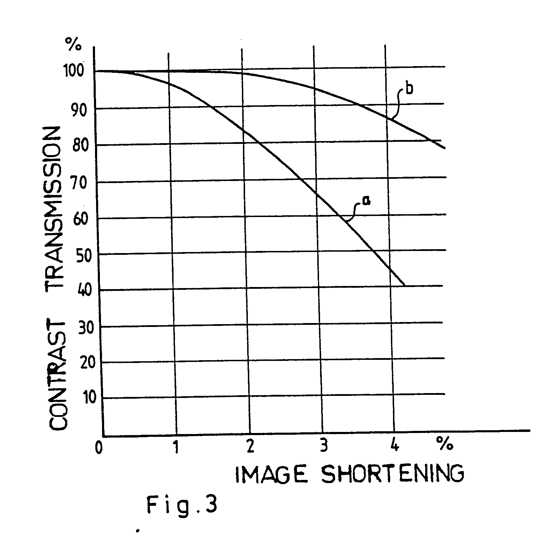

The contrast transmission of the imaging system according to Figure 2 against the angle formed by the original in the object space with the optical axis of the glass fibre array has been determined experimentally. Starting from a contrast transmission of 100% in the case of a right angle between the plane of movement of the original and the optical axis, in Figure 3, the percentage contrast transmission is plotted along the vertical axis against the percentage image shortening plotted along the horizontal axis. Line $a$ illustrates this relationship only when a percentage speed difference between the original and the photoconductor corresponding to the percentage image shortening is applied. It will be seen from line $a$ that at a speed difference of 4%, which also gives an image shortening of 4%, the contrast transmission drops relatively by more than 50%. Line $b$ represents the same relationship when also an angle between the original and the optical axis is set corresponding to the above-derived formula. It will be apparent from line $b$ that with an image shortening of 4% the contrast transmission drops only a good 10% considered relatively, thus giving a gain of about 40% as compared with the situation represented by line $a$. The relationship between the percentage image shortening and the associated angle between the original and the optical axis is given in the following Table for a number of situations:

| Image shortening | Angle $\alpha$ |
|---|---|
| 0% | 90° |
| 1% | 81.9° |
| 2% | 78.5° |
| 3% | 75.9° |
| 4% | 73.7° |

It has been found that there is little difference whether the actual relative aperture angle is taken at 6° or smaller.

It will be apparent that the invention can also be used in a copying machine in which the imaging system is formed by a glass fibre array moved beneath and along a fixed glass plate on which an original lies, by arranging the optical axis to form an acute angle with the glass plate, and also moving the array relatively to a photoconductor element in order stripwise to project an image of the original perpendicularly thereon, e.g., as explained in Netherlands patent application 8004250.

Of course, the invention can also be used for copying an original in order intentionally to obtain a copy with an image change in the direction of travel, e.g., in order appropriately to image the image of an original on a receiving sheet shorter than the original.

**Claims**

1. An optical imaging system in a copying machine for imaging an original in changed form in one direction, which system projects an image of an original (4) moving relatively to the optical system (5) in the object space (22, 23) onto a light-sensitive element (1) moving relatively to the optical system in the image space (26, 27), the speed of an image point which corresponds to an original point, in the image plane (21a) being unequal to the speed of the light-sensitive element (1), characterised in that the light-sensitive element (1) includes an angle (90−$\alpha$) with the image plane (21a) which angle is set to a value at which the image of an original point of the light-sensitive element (1) passes through at least of the image space (26, 27) in the same time as an arbitrary point of the light-sensitive element (1) passes through that part of the image space.

2. An optical imaging system according to Claim 1, characterised in that the angle (90−$\alpha$) is set to a value of up to 16.3° for an average speed difference of up to 4% between an image point in the image plane (21a) and the light-sensitive element (1).

**Patentansprüche**

1. Optisches Abbildungssystem in einem Kopiergerät zum Abbilden eines Originals in in einer Richtung geänderter Form, welches System ein Bild eines sich relativ zu dem optischen System (5) im Objektraum (22, 23) bewegenden Originals (4) auf ein lichtempfindliches Element (1) projiziert, das sich relativ zu dem optischen System im Bildraum (26, 27) bewegt, wobei die Geschwindigkeit eines Bildpunktes, der einem Originalpunkt entspricht, in der Bildebene (21a) von der Geschwindigkeit des lichtempfindlichen Elements (1) verschieden ist, dadurch gekennzeichnet, daß das lichtempfindliche Element (1) mit der Bildebene (21a) einen Winkel (90−α) bildet, der auf einen Wert eingestellt ist, bei dem das Bild eines Originalpunktes auf dem lichtempfindlichen Element (1) wenigstens einen Teil des Bildraumes (26, 27) in der gleichen Zeit durchquert wie ein beliebiger Punkt des lichtempfindlichen Elements (1) diesen Teil des Bildraumes durchquert.

2. Optisches Abbildungssystem nach Anspruch 1, dadurch gekennzeichnet, daß der Winkel (90−α) auf einen Wert von bis zu 16,3° eingestellt ist, für eine durchschnittliche Geschwindigkeitsdifferenz von bis zu 4% zwischen einem Bildpunkt in der Bildebene (21a) und dem lichtempfindlichen Element (1).

**Revendications**

1. Système optique de formation d'image pour appareil copieur formant l'image d'un orginal en changeant la forme dans une direction, ce système projetant une image d'un original (4) en mouvement par rapport au système optique (5) dans l'espace objet (22, 23) sur un élément photosensible (1) en mouvement par rapport au système optique dans l'espace image (26, 27), avec inégalité entre la vitesse dans le plan image (21a) d'un point d'image qui correspond à un point de l'original et de la vitesse de l'élément photosensible (1), caractérisé en ce que l'élément photosensible (1) forme un angle (90°−α) avec le plan image (21a), cet angle étant réglé à une valeur pour laquelle l'image d'un point de l'original sur l'élément photosensible (1) parcourt au moins une partie de l'espace image (26, 27) dans le même temps qu'un point arbitraire de l'élément photosensible (1) parcourt cette partie de l'espace image.

2. Système optique de formation d'image selon la revendication 1, caractérisé en ce que l'angle (90°−α) est réglé à une valeur allant jusqu'à 16,3° pour une différence moyenne de vitesses allant jusqu'à 4% entre un point d'image dans le plan image (21a) et l'élément photosensible (1).

Fig.1

1

EP 0 176 143 B1

Fig.2

Fig.3